# EUROPÄISCHE PATENTSCHRIFT

(11) **EP 0 652 125 B1**
(45) Veröffentlichungstag und Bekanntmachung des Hinweises auf die Patenterteilung: **08.01.1997**
(21) Anmeldenummer: 94112323.4
(22) Anmeldetag: 06.08.1994
(51) Int. Cl.: B60J 3/02

(54) **Sonnenblende für Fahrzeuge**
Sun visor for vehicles
Pare-soleil pour véhicules

(30) Priorität: 05.11.1993 DE 4337808
(43) Veröffentlichungstag der Anmeldung: 10.05.1995
(73) Patentinhaber: BECKER GROUP EUROPE GmbH, 42285 Wuppertal (DE)
(72) Erfinder: Viertel, Lothar, D-66802 Altforweiler (DE); Welter, Patrick, F-57730 La Chambre (FR)

(56) Entgegenhaltungen:
- EP-A- 0 344 135
- EP-A- 0 368 132
- EP-A- 0 399 368
- DE-A- 2 703 447

## Beschreibung

Die Erfindung bezieht sich auf eine Sonnenblende für Fahrzeuge mit einem Sonnenblendenkörper, einer Beleuchtungseinrichtung und einer L-förmig ausgebildeten Lagerachse, deren erster in der Einbaulage etwa senkrecht ausgerichteter Achsschenkel in einem an der Fahrzeugkarosserie befestigbaren Lagerbock gelagert ist und deren zweiter in der Einbaulage etwa waagerecht ausgerichteter Achsschenkel mit seinem freien Endbereich in eine Lagerbohrung eingreift, die im Bereich eines Längsrands des Sonnenblendenkörpers und sich parallel zu diesem erstreckend vorgesehen ist.

Eine Sonnenblende der gattungsgemäßen Art ist in der DE-C-27 03 447 gezeigt und beschrieben. Bei der bekannten Sonnenblende ist die Beleuchtungseinrichtung dem Sonnenblendenkörper zugeordnet, so daß auch die elektrischen Verbindungs-und Kontaktierungselemente im Sonnenblendenkörper unterzubringen sind. Hierdurch ist die Herstellung der Sonnenblende relativ aufwendig und teuer. Auch muß der Sonnenblendenkörper entgegen den Wünschen der Käuferschaft relativ dick ausgebildet werden, weil anderenfalls eine Beleuchtungseinrichtung nicht darin unterzubringen ist. Der Sonnenblendenkörper der herkömmlichen Sonnenblende ist aufgrund der darin installierten Beleuchtungseinrichtung recht schwer, so daß er nicht von einer Lagerachse allein zuverlässig getragen werden kann. Vielmehr ist die bekannte Sonnenblende mit einem Gegenlagerstift ausgerüstet, was die Anordnung eines separaten Gegenlagerböckchens erforderlich macht. Die im Sonnenblendenkörper der herkömmlichen Sonnenblende installierte Beleuchtungseinrichtung erhöht aber nicht nur die Herstellungskosten, sondern erschwert darüber hinaus ein Recyclen empfindlich.

Der vorliegenden Erfindung liegt nun ausgehend von einer Sonnenblende der eingangs genannten Art die Aufgabe zugrunde, Vorsorge dafür zu treffen, daß die Sonnenblende in der Herstellung einfacher, kostengünstiger und montagefreundlicher sowie stilistisch ansprechender, leichter und einfacher zu recyclen ist.

Diese Aufgabe wird erfindungsgemäß dadurch gelöst, daß der zweite Achsschenkel der Lagerachse mit Ausnahme seines in die Lagerbohrung des Sonnenblendenkörpers eingreifenden freien Endbereichs als mit der Beleuchtungseinrichtung bestücktes Gehäuse ausgebildet ist, daß der Sonnenblendenkörper an seinem, den freien Endbereich des zweiten Achsschenkels aufnehmenden Längsrand eine stufenförmige Absetzung als Freiraum für das Gehäuse aufweist und daß die Lagerbohrung des Sonnenblendenkörpers für den freien Endbereich des zweiten Achsschenkels von der Stirnwand der stufenförmigen Absetzung ausgeht.

Durch diese erfindungsgemäßen Maßnahmen werden beachtliche Vorteile erzielt. Durch die Integration der Beleuchtungseinrichtung in die Lagerachse kann nunmehr der Sonnenblendenkörper äußerst dünn ausgebildet werden. Der Sonnenblendenkörper ist lediglich mit einer demontierbaren am freien Endbereich des zweiten Achsschenkels angreifenden Rastfeder und ggf. mit einem Haltekörper für die Rastfeder zu versehen. Aufwendige Einlage- oder Verstärkungselemente sind hingegen nicht mehr erforderlich. Andererseits bietet sich die Bestückung des Sonnenblendenkörpers mit einem Kosmetikspiegel an. Die gegenüber dem Stirnende des Sonnenblendenkörpers zur Längsmitte hin versetzte Lagerung des Sonnenblendenkörpers reduziert dessen Hebelarm und macht einen Gegenlagerstift und die Herstellung und Montage eines separaten Gegenlagerböckchens entbehrlich, so daß sich die Herstellung der Sonnenblende auch insoweit wesentlich verbilligt. Durch die stufenförmige Absetzung des oberen Sonnenblendenkörperlängsrands wird ein Freiraum geschaffen, der vom Gehäuseteil der Lagerachse elegant ausgefüllt wird. Damit ergibt sich für die erfindungsgemäße Sonnenblende eine stilistisch ansprechende Gesamtkonzeption. Ein weiterer Vorteil besteht noch darin, daß die Beleuchtungseinrichtung unabhängig davon, ob sich der Sonnenblendenkörper in der Gebrauchslage oder Nichtgebrauchslage befindet in Benutzung genommen werden kann. Damit kann die Beleuchtungseinrichtung sowohl als Leseleuchte als auch zur Benutzung des Spiegels bei Dunkelheit eingesetzt werden.

Vorteilhafte Weiterbildungen und zweckmäßige Ausgestaltungen der Erfindung sind in den Unteransprüchen angegeben.

Ein Ausführungsbeispiel der Erfindung wird im folgenden anhand der Zeichnungen näher erläutert. Es zeigen:

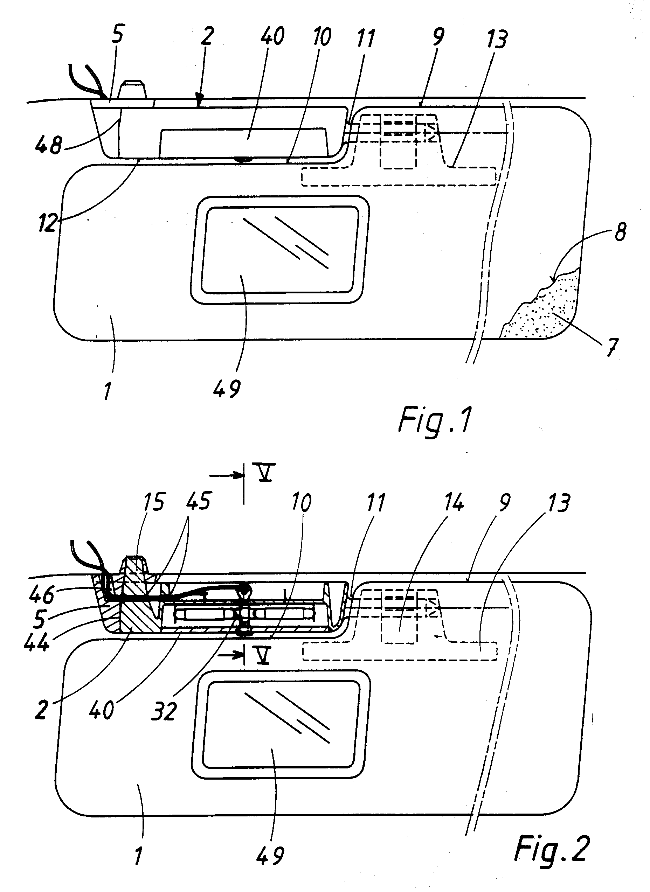

- Fig. 1: eine komplette Ansicht der Sonnenblende mit sich in der Gebrauchslage befindlichem Sonnenblendenkörper,
- Fig. 2: eine Ansicht der Sonnenblende entsprechend Fig. 1 jedoch mit im vertikalen Längsschnitt dargestellter Lagerachse,

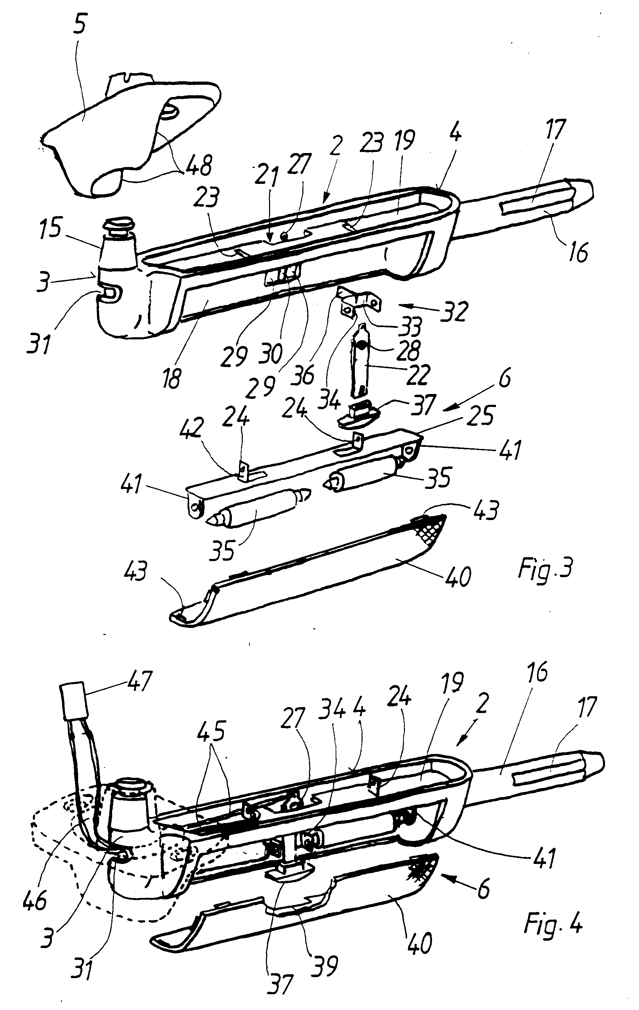

- Fig. 3: eine perspektivische Explosivdarstellung der Lagerachse nebst Beleuchtungseinrichtung und Lagerbock,
- Fig. 4: die Lagerachse nebst Einzelteilen nach Fig. 3 im zusammengebauten Zustand
und

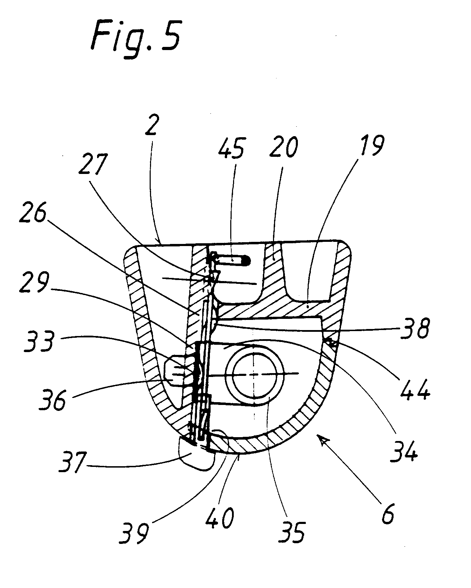

- Fig. 5: einen Schnitt folgend der Linie V - V nach Fig. 2.

Die neue Sonnenblende besteht im wesentlichen aus einem Sonnenblendenkörper 1, einer L-förmigen Lagerachse 2 mit dem vertikalen Achsschenkel 3 und dem horizontalen Achsschenkel 4, einem den vertikalen Achsschenkel 3 schwenkbeweglich aufnehmenden Lagerbock 5 und einer Beleuchtungseinrichtung 6.

Der Sonnenblendenkörper 1 ist bevorzugt aus Polypropylenpartikel 7 gebildet und mit einer TPO-Folie 8 umhüllt. Der obere Längsrand 9 des Sonnenblendenkörpers 1 weist eine stufenförmige Absetzung 10 mit einer Stirnwand 11 auf, wodurch ein Freiraum 12 gebildet ist. Von der Stirnwand 11 aus erstreckt sich eine Lagerbohrung in das Innere des Sonnenblendenkörpers 1 hinein, die etwa parallel zum oberen Längsrand 9 ausgerichtet ist. Die Lagerbohrung ist bereichsweise in einem Einlagekörper 13 ausgebildet, der im Sonnenblendenkörper 1 eingebettet und mit einer Rastfeder 14 bestückt ist.

Die Lagerachse 2 weist den erwähnten vertikalen Achsschenkel 3 auf, dessen freier Endbereich mit einem Konus 15 ausgebildet ist, der in der entsprechend gestalteten Lagerbohrung des Lagerbocks 5 sitzt. Am freien Ende des Konusses 15 sitzt ein Pilzkopf zwecks Herstellung einer Klipsverbindung zwischen der Lagerachse 2 und dem Lagerbock 5. Der horizontale Achsschenkel 4 der Lagerachse 2 weist einen freien in die Lagerbohrung des Sonnenblendenkörpers 1 eingreifenden Endbereich 16 auf, dessen Kreisumfang durch eine Abflachung 17 unterbrochen ist. Die mit der Rastfeder 14 zusammenwirkende Abflachung 17 definiert eine Endraststellung für den Sonnenblendenkörper 1 in der Nichtgebrauchslage am Fahrzeughimmel. Der horizontale Achsschenkel 4 ist mit Ausnahme seines in die Lagerbohrung des Sonnenblendenkörpers eingreifenden freien Endbereichs 16 als mit der Beleuchtungseinrichtung 6 bestücktes Gehäuse 18 ausgebildet. Das Gehäuse 18 ist durch eine horizontale Zwischenwand 19 in ein oberes und ein unteres Gehäuseteil unterteilt. Zur Erhöhung der Stabilität sind Stabilisierungsstege 20 vorgesehen. Im übrigen ist die gesamte Lagerachse 2 als einstückiges Kunststoff-Spritzgußteil ausgebildet. Die horizontale Zwischenwand 19 weist einen Durchbruch 21 für ein Schalterelement 22 der Beleuchtungseinrichtung 6 sowie Schlitze 23 zum Durchlaß von Blechzungen 24 eines Kontaktblechs 25 auf. Eine vertikal ausgerichtete Gehäusezwischenwand 26 ist mit einem angeformten Lagerzapfen 27 versehen, der vom Lagerloch 28 des Schalterelements 22 übergriffen wird. Zudem weist die Gehäusezwischenwand 26 etwa mittig Vertiefungen 29 sowie zwischen den Vertiefungen 29 eine Schlitzöffnung 30 auf. Ein Durchgangsloch 31 durchsetzt den vertikalen Achsschenkel 3, mündet im oberen Gehäusebereich und ermöglicht die Durchführung von Kabeln 45 zur elektrischen Stromversorgung der Beleuchtungseinrichtung 6.

Zur Beleuchtungseinrichtung 6 gehört zunächst ein U-förmiges Kontaktblech 32, das links und rechts mit erhöhten Kontaktzonen 33, hochgestellten Aufnahmezungen 34 für die Soffitten 35 und einem rückseitigen Befestigungssteg 36 ausgebildet ist. Das Kontaktblech 32 wird in die Vertiefungen 29 eingesetzt, wobei der Befestigungssteg 36 die Schlitzöffnung 30 durchsetzt. Ein fester Sitz wird durch Krallen am Befestigungssteg 36 gewährleistet. Mit den Kontaktzonen 33 des Kontaktblechs 32 ist das Schalterelement 22, das am unteren Ende einen Betätigungsknopf 37 trägt kontaktierbar. Ein ungewolltes Schalten wird durch eine Prägezone 38, die sich an einer Wandung des Durchbruchs 21 abstützt und durch den Betätigungsknopf 37 im Schlitz 39 des Leuchtfensters 40 vermieden.

Zur Beleuchtungseinrichtung gehört ferner das Kontaktblech 25 mit den abgewinkelten Aufnahmezungen 41 für die Soffitten 35. Die am Kontaktblech 25 ausgebildeten und hochgestellte Blechzungen 24 mit ausgestellten Krallen 42 werden in die Schlitze 23 der Zwischenwand 19 eingedrückt. Die Soffitten 35 können sodann eingeklemmt werden zwischen die Aufnahmezungen 34 und 41. Alsdann kann der nach vorne offene Gehäusebereich durch das Leuchtfenster 40 verschlossen werden. Die am Leuchtfenster 40 ausgebildeten Klipszungen 43 klipsen und halten sich in den dafür ausgebildeten Bereich 44 des Gehäuses 18.

Die Lagerachse 2 bildet nach der Verbindung mit dem Lagerbock 5 aufgrund der besonderen Formgebung eine linienförmige Abstützung 44 und erhält eine Stabilität die ausreicht, um die evtl. auftretenden Biegemomentkräfte aufnehmen zu können. Die Abstützung 44 bildet praktisch einen Gegenlagerersatz.

Die beiden elektrischen Leiter (Kabel 45) sind durch das Durchgangsloch 31 sowie durch den im Lagerbock 5 vorgesehenen Freibereich in den oberen Gehäuseteil einzuschieben. Die Kabelenden sind dann einmal mit dem Schalterelement 22 und einmal mit einer der Blechzungen 24 des Kontaktblechs 25 zu verbinden, insbesondere durch Löten. Die anderen, der Sonnenblende beabstandeten Kabelenden werden zweckmäßigerweise mit einem Kontaktstecker 47 bestückt.

Der Sonnenblendenkörper 1 kann einmal um den Zapfen 16 herum zur Windschutzscheibe oder zum Himmel eines Fahrzeugs hin geklappt werden. Der Sonnenblendenkörper 1 kann zudem zur Seite geschwenkt werden, um sich dann vor einem Seitenfenster zu befinden. Dabei können sich die Kabel 45 aufgrund des im Lagerbock 5 ausgebildeten Freiraums 46 ohne eine Beschädigungsgefahr frei bewegen. Auch ein Überschwenken zur Seitenscheiben bzw. zur Windschutzscheibe ist nicht möglich, weil durch Formgebungsmaßnahmen am Lagerbock 5 und an der Lagerachse 2 Schwenkwegbegrenzungsanschläge 48 vorhanden sind.

Der Sonnenblendenkörper 1 ist mit einem in einem Rahmen gefaßten Kosmetikspiegel 49 ausgestattet, wobei der Kosmetikspiegel 49 vorzugsweise in einer Ausnehmung im Sonnenblendenkörper 1 sitzt.

## Patentansprüche

1. Sonnenblende für Fahrzeuge mit einem Sonnenblendenkörper (1), einer Beleuchtungseinrichtung (6) und einer L-förmig ausgebildeten Lagerachse (2), deren erster in der Einbaulage etwa senkrecht ausgerichtete Achsschenkel (3) in einem an der Fahrzeugkarosserie befestigbaren Lagerbock (5) gelagert ist und deren zweiter in der Einbaulage etwa waagerecht ausgerichteter Achsschenkel (4) mit seinem freien Endbereich (16) in eine Lagerbohrung eingreift, die im Bereich eines Längsrands (9) des Sonnenblendenkörpers (1) und sich parallel zu diesem erstreckend vorgesehen ist, dadurch gekennzeichnet, daß der zweite Achsschenkel (4) der Lagerachse (2) mit Ausnahme seines in die Lagerbohrung des Sonnenblendenkörpers (1) eingreifenden freien Endbereichs (16) als mit der Beleuchtungseinrichtung (6) bestücktes Gehäuse (18) ausgebildet ist, daß der Sonnenblendenkörper (1) an seinem, den freien Endbereich (16) des zweiten Achsschenkels (4) aufnehmenden Längsrand (9) eine stufenförmige Absetzung (10) als Freiraum (12) für das Gehäuse (18) aufweist und daß die Lagerbohrung des Sonnenblendenkörpers (1) für den freien Endbereich (16) des zweiten Achsschenkels (4) von der Stirnwand (11) der stufenförmigen Absetzung (10) ausgeht.

2. Sonnenblende nach Anspruch 1, dadurch gekennzeichnet, daß das Gehäuse (18) einstückig und materialeinheitlich mit der L-förmigen Lagerachse (2) ausgebildet ist und aus einem Kunststoff-Spritzgußteil besteht.

3. Sonnenblende nach Anspruch 1 oder 2, dadurch gekennzeichnet, daß das Gehäuse (18) durch eine sich darin im wesentlichen waagerecht erstreckende Zwischenwand (19) in einen oberen Gehäuseteil und einen unteren Gehäuseteil unterteilt ist und daß im oberen Gehäuseteil eine den ersten Achsschenkel (3) der Lagerachse (2) durchsetzende Bohrung (31) zum Hindurchführen von elektrischen Verbindungsleitungen (Kabeln 45) mündet.

4. Sonnenblende nach wenigstens einem der Ansprüche 1 bis 3, dadurch gekennzeichnet, daß der untere, zur Aufnahme der Beleuchtungsmittel (Soffitten 35) bestimmte Gehäuseteil eine vorderseitige Öffnung aufweist, in die ein Leuchtfenster eingesetzt ist.

5. Sonnenblende nach wenigstens einem der Ansprüche 1 bis 4, dadurch gekennzeichnet, daß der den ersten Achsschenkel (3) übergreifende Lagerbock (5) einen ausgesparten und zudem radial erweiterten Freibereich (46) aufweist, der das Hindurchführen von elektrischen Verbindungsleitungen (Kabeln 45) durch die im ersten Achsschenkel (3) vorgesehene Bohrung (31) ermöglicht.

6. Sonnenblende nach wenigstens einem der Ansprüche 1 bis 5, dadurch gekennzeichnet, daß der Lagerbock (5) mit Wegbegrenzungsanschlägen (48) ausgebildet ist.

## Claims

1. A sun visor for vehicles with a sun visor body (1), an illumination device (6) and a L-shaped support axle (2), whose in mounting position approximately vertical leg (3) is supported in a support stud (5) which is fixable to the vehicle body and whose in mounting position approximately horizontal second leg (4) is inserted with its free end part (16) in a support hole, which is provided near a longitudinal edge (9) of the sun visor body (1) and is parallel to this sun visor body, **characterized in that** the second leg (4) of the support axle (2), with the exception of its free end part (16) which is inserted in the support hole of the sun visor body (1), is formed as a housing (18) provided with the illumination device (6), in that the sun visor body (1) is provided on its longitudinal edge (9) which receives the free end part (16) of the second axle leg (4) with a stepped depression (10) as an open space (12) for the housing (18) and in that the support hole of the sun visor body (1) for the free end part (16) of the second axle leg (4) originates from the front wall (11) of the step like depression (10).

2. A sun visor according to claim 1, **characterized in that** the housing (18) is configured in one piece and in material integration with the L-shaped support axle (2) and consists of a plastic material injection moulded part.

3. A sun visor according to claim 1 or 2, **characterized in that** the housing (18) is divided by a generally horizontal separating wall (19) in an upper housing part and in a lower housing part and in that in the upper housing part opens a hole (31) which passes through the first leg (3) of the support axle (2), for the insertion of electric connection cables (cables 45) through it.

4. A sun visor according to at least one of the claims 1 to 3, **characterized in that** the lower housing part for the fitting of the illumination means (tubular lamps 35) is provided with a front opening, in which is inserted an illumination window.

5. A sun visor according to at least one of the claims 1 to 4, **characterized in that** the support stud (5) which overlaps the first axle leg (3) is provided with an open recessed radially enlarged part (46), which allows the insertion of electric connection cables (cables 45) through the hole (31) which is provided in the first axle leg (3).

6. A sun visor according to at least one of the claims 1to 5, **characterized in that** the support stud (5) is provided with travel limiting abutments (48).

## Revendications

1. Pare-soleil pour vehicules comportant un corps (1) du pare-soleil, un dispositif d'éclairage (6) et un axe de support (2) en forme de "L", dont la première aile d'axe (3), orientée sensiblement en direction verticale en position d'assemblage, est soutenue dans un support de palier (5) à fixer à la carrosserie du véhicule et dont la seconde aile d'axe (4), orientée sensiblement en direction horizontale en position d'assemblage, s'engage par sa zone d'extrémité libre (16) dans un trou de support lequel est prévu à proximité d'une bordure longitudinale (9) du corps (1) du pare-soleil et s'étend parallèlement à ce corps, caractérisé en ce que la seconde aile d'axe (4) de l'axe de support (2), sauf pour sa zone d'extrémité libre (16) s'engageant dans le trou de support du corps (1) du pare-soleil, fait fonction de logement (18) pour le dispositif d'éclairage (6), que le corps (1) du pare-soleil présente, sur sa bordure longitudinale (9) recevant la zone d'extrémité libre (16) de la seconda aile d'axe (4), un épaulement (10) en gradin en tant qu'espace libre (12) pour le logement (18) et que le trou de support du corps (1) du pare-soleil pour la zone d'extrémité libre (16) de la seconde aile d'axe (4) s'étend depuis la paroi de face (11) de l'épaulement en forme de gradin.

2. Pare-soleil selon la revendication 1, caractérisé en ce que le logement (18) est constitué d'une seule pièce avec, et fabriqué de la même matière que l'axe de support (2) en forme de "L" et se compose d'une pièce moulée par injection de matière synthétique.

3. Pare-soleil selon la revendication 1 ou 2, caractérisé en ce que le logement (18) est divisé en une partie supérieure de logement et une partie inférieure de logement par une cloison intermédiaire (19) s'étendant sensiblement en direction horizontale dans ce s'étendant sensiblement en direction horizontale dans ce logement, et en ce qu'un trou (31) débouchant dans la partie supérieure du logement est prévu pour permettre le passage de lignes électriques de liaison (câbles 45), ce trou traversant la première aile d'axe (3) de l'axe de support (2).

4. Pare-soleil selon au moins l'une des revendications 1 à 3, caractérisé en ce que la partie inférieure du logement, destinée à recevoir les moyens d'éclairage (ampoules à filament rectiligne) présente une ouverture à sa partie avant, dans laquelle est insérée une fenêtre d'éclairage.

5. Pare-soleil selon au moins l'une des revendications 1 à 4, caractérisé en ce que le support de palier (5) engageant à sa partie supérieure la première aile d'axe (3) présente une zone libre en creux et en outre élargie radialement laquelle permet le passage de lignes électriques de liaison (câbles 45) à travers le trou prévu dans la première aile d'axe (3).

6. Pare-soleil selon au moins l'une des revendications 1 à 5, caractérisé en ce que le support de palier (5) est de forme prévoyant des butées (48) de limitation de chemin.
